# EUROPEAN PATENT APPLICATION

(11) **EP 2 797 384 A1**
(43) Date of publication of application: **29.10.2014**
(21) Application number: 12830878.0
(22) Date of filing: 17.12.2012
(51) Int. Cl.: H05B 6/12, H02J 17/00

(54) **NON-CONTACT POWER SUPPLY APPARATUS AND NON-CONTACT POWER TRANSMISSION SYSTEM**

(30) Priority: 20.12.2011 JP 2011278112
(71) Applicant: Panasonic Corporation, Kadoma-shi, Osaka 571-8501 (JP)
(72) Inventor: KITAIZUMI, Takeshi, Osaka 540-6207 (JP); KATAOKA, Akira, Osaka 540-6207 (JP); SHIGEOKA, Takehiko, Osaka 540-6207 (JP)
(74) Representative: Schwabe - Sandmair - Marx
(86) International application number: PCT/JP2012/008054
(87) International publication number: WO 2013/094174

(57) **Abstract**

A contactless power feeder of the present invention includes: a top plate which is mounted with a load; a primary coil which is arranged below the top plate and generates a high-frequency field; an inverter which feeds high-frequency power to the primary coil; a control part which controls the inverter; and a load discriminating part which determines whether the load is an object to be heated that is a metal container such as a pot and should be induction-heated, or a power receiving device provided with a secondary coil that is electromagnetically coupled with the primary coil, wherein the control part is configured to control the inverter in accordance with a result of determination by the load discriminating part.

## Description

### Technical Field

The present invention relates to a contactless power feeder such as an induction heating cooker, which performs induction heating on an object to be heated such as a pot through use of a high-frequency field, while feeding power to a predetermined power receiving device, and a contactless transmission system provided with the contactless power feeder and the power receiving device.

### Background Art

As a conventional contactless power feeder of this kind, for example, Japanese Patent Application Laid-Open No. H5-184471 proposes a contactless power feeder which operates in the case of detecting a pot or in the case of acquiring a specific signal from a predetermined power receiving device.

It is to be noted that in disclosure of the present specification, while "contactless" means the state of being not directly coupled electrically and mechanically, it includes the state of devices one of which is mounted on the other.

### Citation List

### Patent Literatures

Patent Literature 1: Japanese Patent Application Laid-Open No. H5-184471

### Summary of Invention

### Technical Problem

In the case of using the induction heating cooker as the conventional contactless power feeder, it is used as being mounted with a coffee mill, a cooker pot or the like as the power receiving device on top of the pot or the like as the object to be heated that should be induction-heated. As thus described, in the case of using the coffee mill, the cooker pot or the like as the power receiving device, required power and power adjustment range are significantly different depending on each power receiving device, and an amount of power required at the time of induction-heating the pot or the like as the object to be heated is significantly different from an amount of power required by each power receiving device. Hence, in the conventional contactless power feeder, it is difficult to efficiently perform a power feeding operation on each power receiving device while efficiently performing an induction heating operation on a pot or the like as an object to be heated, through use of one contactless power feeder. For this reason, in this technical field, realization of a contactless power feeder has been an important problem to be solved, the feeder being capable of efficiently performing a power feeding operation on a power receiving device while efficiently performing an induction heating operation on an object to be heated.

### Solution to Problem

In order to overcome the above problem, a contactless power feeder according to the present invention includes: a top plate which is mounted with a load; a primary coil which is arranged below the top plate and generates a high-frequency field; an inverter which feeds high-frequency power to the primary coil; a control part which controls the inverter; and a load discriminating part which determines whether the load is an object to be heated that is a metal container such as a pot and should be induction-heated, or a power receiving device provided with a secondary coil that is electromagnetically coupled with the primary coil, wherein the control part is configured to control the inverter in accordance with a result of determination by the load discriminating part.

Further, a contactless transmission system according to the present invention includes: a contactless power feeder; and a power receiving device which is arranged adjacently to and electromagnetically coupled with the contactless power feeder and to which power is fed from the contactless power feeder, wherein the contactless power feeder is provided with a top plate which is mounted with a load, a primary coil which is arranged below the top plate and generates a high-frequency field, an inverter which feeds high-frequency power to the primary coil, a control part which controls the inverter, and a load discriminating part which determines whether the load is an object to be heated, or a power receiving device provided with a secondary coil that is electromagnetically coupled with the primary coil, the power receiving device is provided with a secondary coil which is mounted on the contactless power feeder and receives a high-frequency field from the primary coil to form desired power, and an operation part which is driven by the power from the secondary coil, and the control part is configured to control the inverter depending on a state of the load in accordance with a result of determination of the load discriminating part.

According to the present invention configured as above, even in the case of mounting a load whose required amount of power, power adjustment range and the like are different, an appropriate operation is performed in a specification in accordance with the kind of the load, thereby to eliminate the need for the user to significantly change an operation method and the like in accordance with the kind of the load, thus allowing realization of a contactless power feeder and a contactless transmission system with good operability.

Although new features of the invention are just what are specifically recited in attached CLAIMS, the present invention will be understood and evaluated better concerning both its configuration and contents by reading the following detailed descriptions along with drawings in combination with other features.

### Advantageous Effects of Invention

In the present invention, it is determined whether a load mounted on a contactless power feeder is a metal container such as a pot or the like as an object to be heated that should be induction-heated or a predetermined power receiving device, to allow appropriate control in accordance with the kind of the determined load, thereby to eliminate the need for the user to significantly change an operation method and the like in accordance with the kind of the load, thus allowing realization of a contactless power feeder and a contactless transmission system with good operability.

### Brier Description of Drawings

Fig. 1 is (a) a sectional view and (b) a plan view, showing a schematic configuration of a contactless transmission system having a contactless power feeder of an embodiment 1 according to the present invention;
Fig. 2 is a sectional view showing the contactless transmission system having the contactless power feeder of the embodiment 1 according to the present invention;
Fig. 3 is a sectional view showing the contactless transmission system having the contactless power feeder of the embodiment 1 according to the present invention;
Fig. 4 is a sectional view showing the contactless transmission system in which another power receiving device is mounted on the contactless power feeder of the embodiment 1 according to the present invention;
Fig. 5 is a diagram explaining a method for determining a load in the contactless power feeder of the embodiment 1 according to the present invention;
Fig. 6 is a sectional view showing a schematic configuration of a contactless transmission system having a contactless power feeder of an embodiment 2 according to the present invention; and
Fig. 7 is a flowchart showing an operation of the contactless power feeder of the embodiment 2 according to the present invention.

### Description of Embodiments

A contactless power feeder of a first aspect according to the present invention includes: a top plate which is mounted with a load; a primary coil which is arranged below the top plate and generates a high-frequency field; an inverter which feeds high-frequency power to the primary coil; a control part which controls the inverter; and a load discriminating part which determines whether the load is an object to be heated that should be induction-heated, or a power receiving device provided with a secondary coil that is electromagnetically coupled with the primary coil, wherein the control part may be configured to control the inverter in accordance with a result of determination by the load discriminating part.

As for the contactless power feeder of the first aspect according to the present invention configured as above, even in the case of mounting a load whose required amount of power, power adjustment range and the like are different, the feeder appropriately operates in a specification in accordance with the kind of the load, thereby to eliminate the need for the user to significantly change setting and the like in accordance with the kind of the load, thus allowing realization of a contactless power feeder with good operability.

A contactless power feeder of a second aspect according to the present invention may be configured that the control part of the first aspect is configured to decrease power to be fed to the primary coil in the case of the load having been determined as the power receiving device than in the case of the load having been determined as the object to be heated, based on a result of determination by the load discriminating part. In the contactless power feeder of the second aspect according to the present invention configured as above, an appropriate operation can be performed at power in accordance with each load, thereby to eliminate the need for the user to significantly change setting and the like in accordance with the kind of the load and further to allow prevention of equipment with a small required amount of power from being erroneously operated at high power, thus allowing realization of a contactless power feeder with good operability.

A contactless power feeder of a third aspect according to the present invention may be provided with an operation part which sets an amount of energization to the primary coil in the first aspect or the second aspect, wherein the control part is configured to change operational contents of the operation part so as to correspond to a specification of the power receiving device in the case of the load having been determined as the power receiving device based on a result of determination by the load discriminating part. In the contactless power feeder of the third aspect according to the present invention configured as above, the user can readily perform an operation in accordance with the kind of the load, thus allowing realization of a contactless power feeder with good operability.

A contactless power feeder of a fourth aspect according to the present invention may be provided with a display part which displays a function of the operation part of the third aspect wherein the control part is configured to change a display of the display part in accordance with a change in operational contents of the operation part. In the contactless power feeder of the fourth aspect according to the present invention configured as above, the user can readily perform an operation in accordance with the kind of the load while checking it by the display part, thus allowing realization of a contactless power feeder with good operability.

A contactless power feeder of a fifth aspect according to the present invention may be configured that the load discriminating part in the first to fourth aspects is configured to determine the kind of a load at least from electric characteristics of at least an input current to an inverter 3, a current flowing through the first coil and a voltage generated in the primary coil, and the control part may be configured to lower a value of the electric characteristics as a determination criterion level on which the load discriminating part determines the load as an inappropriate load from the electric characteristics in the case of the load having been determined as the power receiving device as compared with the case of the load having been determined as the object to be heated. In the contactless power feeder of the fifth aspect according to the present invention configured as above, determination accuracy can be improved, thus allowing realization of a safe contactless power feeder with good operability.

A contactless transmission system of a sixth aspect according to the present invention includes: a contactless power feeder; and a power receiving device which is arranged adjacently to and electromagnetically coupled with the contactless power feeder and to which power is fed from the contactless power feeder, wherein the contactless power feeder is provided with a top plate which is mounted with a load, a primary coil which is arranged below the top plate and generates a high-frequency field, an inverter which feeds high-frequency power to the primary coil, a control part which controls the inverter, and a load discriminating part which determines whether the load is an object to be heated that should be induction-heated, or a power receiving device provided with a secondary coil that is electromagnetically coupled with the primary coil, the power receiving device is provided with a secondary coil which is mounted on the contactless power feeder and receives a high-frequency field from the primary coil to form desired power, and an operation part which is driven by the power from the secondary coil, and the control part may be configured to control the inverter in accordance with a result of determination of the load discriminating part.

In the contactless transmission system of the sixth aspect according to the present invention configured as above, even in the case of mounting the power receiving device as a load, whose required amount of power, power adjustment range and the like are different, on the contactless power feeder, an appropriate operation can be performed in a specification in accordance with the kind of the load, thereby to eliminate the need for the user to significantly change setting and the like in accordance with the kind of the load, thus allowing realization of a contactless transmission system with good operability.

In a contactless transmission system of a seventh aspect according to the present invention, the power receiving device of the sixth aspect is provided with a secondary-side power transmitting/receiving part which transmits an equipment identifying signal as a certification signal specific to the power receiving device, the contactless power feeder is provided with a primary-side power transmitting/receiving part which receives the equipment identifying signal from the power receiving device, and the control part of the contactless power feeder may be configured to control the inverter so as to correspond to a specification of the power receiving device based on the equipment identifying signal received by the primary-side power transmitting/receiving part. In the contactless transmission system of the seventh aspect according to the present invention configured as above, an appropriate operation can be performed at power in accordance with each load, thereby to eliminate the need for the user to significantly change setting and the like in accordance with the kind of the load and further to allow prevention of equipment with a small required amount of power from being erroneously operated at high power, thus allowing realization of a contactless transmission system with good operability.

In a contactless transmission system of an eighth aspect according to the present invention, the contactless power feeder of the seventh aspect is provided with an operation part which sets an amount of energization to the primary coil, and the control part may be configured to change operational contents of the operation part so as to correspond to a specification of the power receiving device based on the equipment identifying signal received by the primary-side power transmitting/receiving part. In the contactless transmission system of the eighth aspect according to the present invention configured as above, the user can readily perform an operation in accordance with the kind of the load, thus allowing realization of a contactless power feeder with good operability.

In a contactless transmission system of a ninth aspect according to the present invention, the contactless power feeder of the eighth aspect is provided with a display part which displays a function of the operation part, and the control part may be configured to change a display of the display part in accordance with a change in operational contents of the control part. In the contactless transmission system of the ninth aspect according to the present invention configured as above, the user can readily perform an operation in accordance with the kind of the load while checking it by the display part, thus allowing realization of a contactless power feeder with good operability.

Although examples of using an induction-heated cooker as a power feeder will be described in descriptions of a contactless power feeder and a contactless transmission system of the following embodiments, these configurations are exemplary, and the present invention is not limited to the configurations described in the following embodiments, but includes a power feeder having technical features of the present invention. Further, the present invention may include appropriate combination of arbitrary configurations that will be described in the respective embodiments hereinafter described, and the combined configuration exerts respective effects.

### Embodiment 1

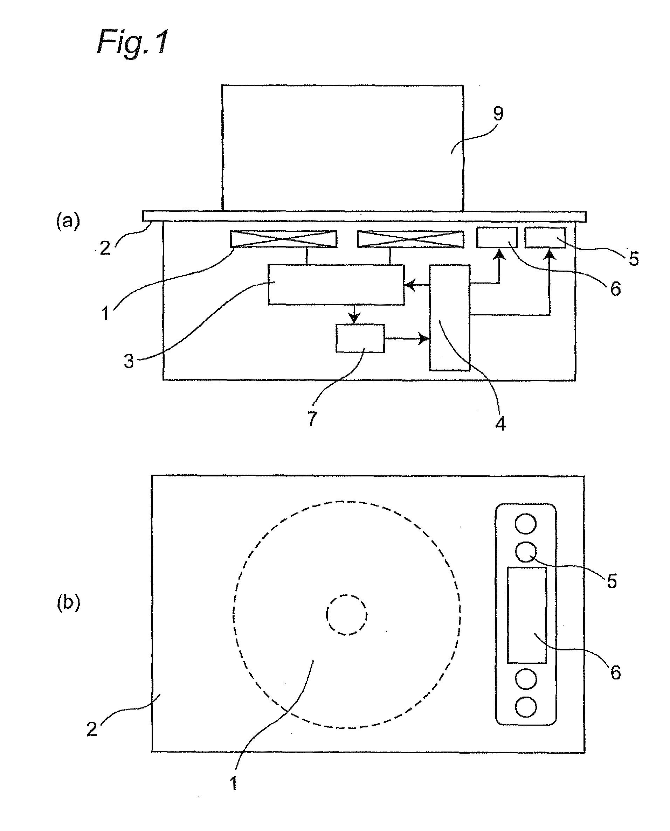

Hereinafter, a contactless power feeder and a contactless transmission system of an embodiment 1 according to the present invention will be described with reference to attached Figs. 1 to 5.

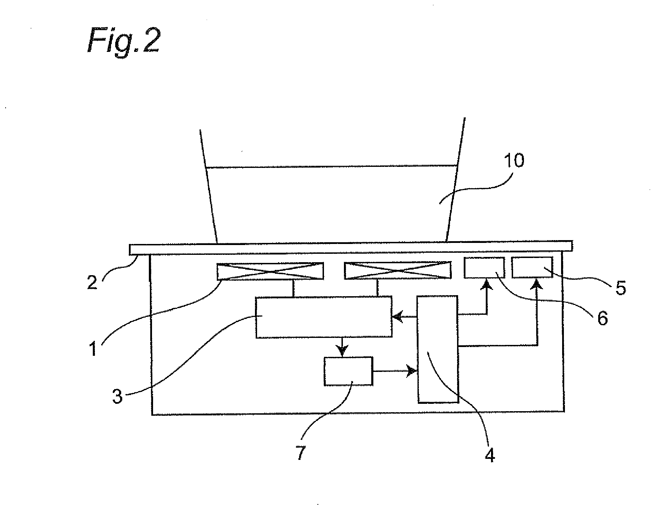

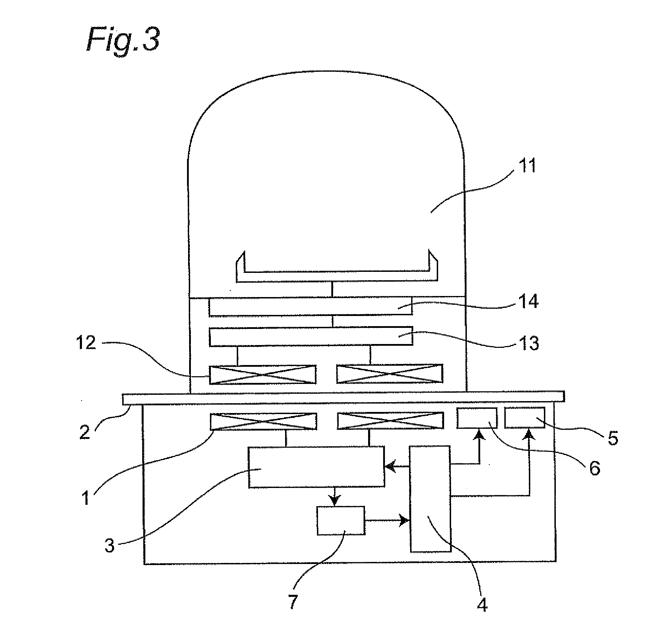

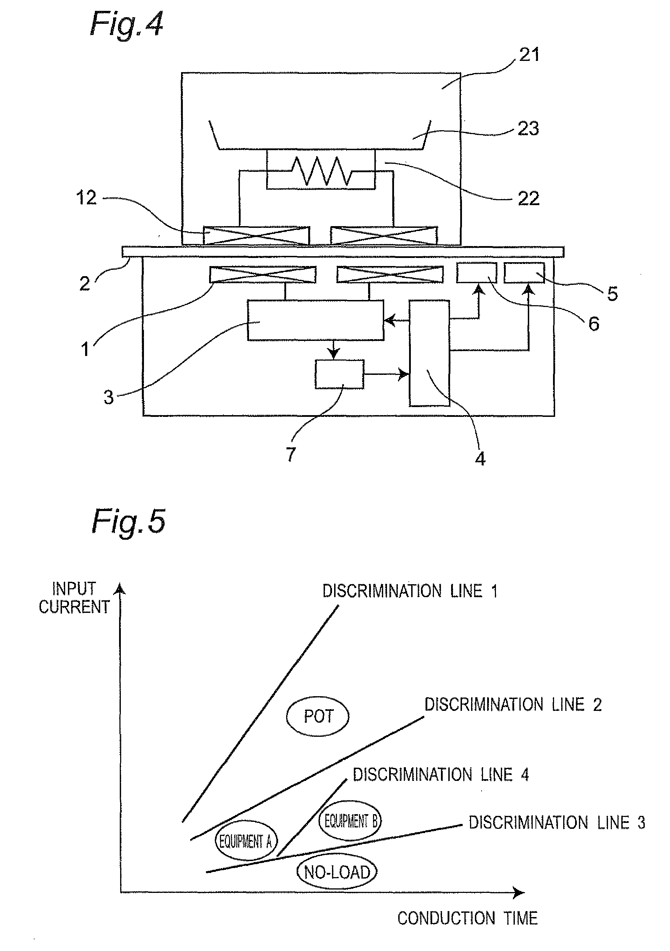

Fig. 1 is a view showing a schematic configuration of a contactless power feeder and a contactless transmission system where a load is mounted on the contactless power feeder, and in Fig. 1, (a) is a sectional view of the contactless power feeder mounted with a load 9, and (b) is a plan view of the contactless power feeder. As the contactless power feeder of the embodiment 1, an induction heating cooker is used. The contactless power feeder of the embodiment 1 is provided with a pot 10 (see Fig. 2) as an object to be heated that should be induction-heated, a power receiving device 11 (see Fig. 3) having a DC motor, a top plate 2 configured by crystallized glass or the like for mounting of the load 9 such as a power receiving device 21 (see Fig. 4), a primary coil 1 which is arranged below the top plate 2 and transmits power through use of a high-frequency field to the load 9, an inverter 3 which feeds high-frequency power to the primary coil 1, and a control part 4 which controls a semiconductor switch or the like inside the inverter 3. Further, the contactless power feeder of the embodiment 1 is provided with a load discriminating part 7 which determines whether the load 9 is an object to be heated that is a metal container such as a pot and should be induction-heated, or a power receiving device such as a rotary machine satisfying a predetermined configuration and a predetermined condition such as provision of the secondary coil, an operating section 5 which performs an operation for setting an amount of energization and the time for energization to the primary coil 1, and a display part 6 which displays a setting state set in the operating section 5, the remaining time of a set timer, and the like.

The control part 4 controls an operation of the inverter 3 such that the load 9 performs an optimal operation in accordance with a detection state of the load discriminating part 7, and feeds a high-frequency field to the load 9 via the primary coil 1. When the load 9 is the object to be heated that is the metal container such as the pot and should be induction-heated, an induction current is generated in the metal container, and heat is generated due to resistance of the metal container itself. Further, when the load 9 is the power receiving device provided with the secondary coil, the power receiving device is arranged on the top plate 2 such that the secondary coil housed in the power receiving device is located in a position magnetically coupled with the primary coil, whereby the power receiving device is operated by power fed by the high-frequency field.

Next, an operation and a function in the contactless power feeder of the embodiment 1 configured as above will be described. The control part 4 of the contactless power feeder converts power fed from an AC power source, not shown, to high-frequency power of 20 to 100 kHz by use of a semiconductor switch inside the inverter 3, to output a low-output high-frequency field to the load 9 by use of the primary coil 1. At this time, when the load 9 is determined by the load discriminating part 7 to be the metal container such as the pot, in the contactless power feeder, a control specification of the control part 4, an operation specification of the operating section 5, a display specification of the display part 6 and the like are changed such that the contactless power feeder operates as an induction heating device for induction-heating the pot as the load 9. Its detailed operation will be described later.

On the other hand, when the load discriminating part 7 determines the load 9 as a power receiving device satisfying a predetermined condition such as provision of the secondary coil electromagnetically coupled with the primary coil, in the contactless power feeder, the control specification of the control part 4, the operation specification of the operating section 5, the display specification of the display part 6 and the like are changed as described later such that an operation corresponding to the kind of the determined equipment can be performed.

Fig. 2 shows the contactless power feeder of the embodiment 1 in the case of using the pot 10 as the object to be heated that should be induction-heated as the load 9. When the user arranges the pot 10 in a predetermined position (induction-heated and power-fed region) on the top plate 2 and directs a start-up operation by use of the operation part 5, the control part 4 makes the inverter 3 operate at lower power, to feed a high-frequency field from the primary coil 1 to the pot 10. Herein, the load discriminating part 7 determines whether the load 9 is a foreign matter such as a spoon, a pot not suitable for induction heating, the pot 10 that can be induction-heated, or the power receiving device, from electric characteristics such as an input current to the inverter 3, a current flowing through the primary coil 1, and a voltage generated in the primary coil 1.

When the load 9 is the pot 10 that can be induction-heated, the control part 4 brings the maximum output into the state of being outputtable to the primary coil 1, brings all ranges settable by the operating section 5 into an operable state, and sets the range of adjustment for an output to the primary coil 1 to a maximum adjustable range.

The load discriminating part 7 has a determination criterion level which is used at the time of determining the load 9 from the electric characteristics. This determination criterion level becomes a criterion for determining a foreign matter such as a spoon and a pot not suitable for induction heating as inappropriate loads.

Even when the material for the pot 10 as the load 9 is metal, in the case of its shape being small or in the case of the material being not suitable for the induction heating condition such as metal with low magnetic permeability and low resistance like aluminum, the control part 4 stops the heating operation and make a display in the display part 6 indicating that the load 9 is the inappropriate load.

Fig. 3 shows a case where the power receiving device 11 is a mixer as an example of the load 9 being a power receiving device whose consumed power is relatively low power. The mixer as the power receiving device 11 has a DC motor 14, a secondary coil 12 which is electromagnetically coupled with the primary coil 1 to receive feed of high-frequency power, and a DC power source 13 which feeds the power received in the secondary coil 12 to the DC motor 14. Herein, as for an operation part driven by power from the secondary coil 12, it is configured by the DC power source 13 and the DC motor 14, but in the present invention, the configuration includes a configuration of only a drive section, not including the power source.

When the user arranges the power receiving device 11 in a predetermined position on the top plate 2 and thereafter operates a start-up switch inside the operating section 5 of the contactless power feeder to direct a start-up operation, the control part 4 makes the inverter 3 operate at low power, to feed a high-frequency field from the primary coil 1 to the power receiving device 11. Herein, the load discriminating part 7 determines the kind of the load 9 from electric characteristics such as an input current to the inverter 3, a current flowing through the primary coil 1, and a voltage generated in the primary coil 1.

When it is determined by the load discriminating part 7 that the load 9 is the power receiving device 11 with reliably low consumed power, the control part 4 changes the maximum inputted power, power adjustment range for the inputted power, the number of setting for the load operation and a determination criterion level to serve as a criterion for determining inappropriate load, and the like, while changing the operation specification of the operating section 5 and the display specification of the display part 6, in a manner appropriate for the power receiving device 11.

In the case of the load 9 being the power receiving device 11 with relatively low consumed power, it is sufficient if required inputted power is low as compared with the pot 10 as the object to be heated that should be induction-heated, e.g. not higher than 100 W, and the set number of revolutions of the DC motor 14 is the set number being around three stages, e.g. a low rate, a medium rate and a high rate. In this case, in the contactless power feeder of the embodiment 1, specifically, the control part 4 limits the amount of energization to the primary coil 1 based on the determination result as the output of the load discriminating part 7 such that the secondary coil 12 of the power receiving device 11 can receive the maximum consumed power of the power receiving device 11, which is the maximum power where 100 W in the embodiment 1. Further, in order to operate the power receiving device 11, the control part 4 limits the operating section 5 so as to be able to perform only an operation to switch the power receiving device 11 to a low rate, a medium rate, a high rate or a stop, while changing a display of the display part 6 in accordance with the operational contents of the operating section 5. Moreover, in the case of the load 9 being the power receiving device 11 with relatively low consumed power, since the determination is difficult when the load discriminating part 7 is an inappropriate load as compared with the case of the load 9 being the conduction-heatable pot, a value of electric characteristics as the determination criterion level for determination by the load discriminating part 7 as the inappropriate load is set low as compared with the case of the load 9 being the conduction-heatable pot.

The control part 4 is changed to a control specification suitable for the power receiving device 11, and the inverter 3 is operated so as to have input power set by the user, to feed high-frequency power to the secondary coil 12 electromagnetically coupled with the primary coil 1. The high-frequency power fed to the secondary coil 12 is converted by an electric circuit of a rectification section, a smoothing capacitor and the like provided inside the DC power source 13, to form a DC power source. By connecting the DC motor 14 to this DC power source 13, the power receiving device 11 operates as rotary equipment.

Subsequently, Fig. 4 shows a case where, as an example of the load 9 being a power receiving device 21 with relatively large power provided with a heater, the power receiving device 21 is a grill for grilling fish. In Fig. 4, the power receiving device 21 is provided with a heater 22, a container 23 heated by the heater 22, and the secondary coil 12 which is electromagnetically coupled with the primary coil 1 to receive feed of high-frequency power, to feed power to the heater 22. Although there will be described the case of a grill provided with the heater 22 as the power receiving device 21 with relatively high consumed power, a power receiving device with consumed power of not lower than 500 W is regarded as the power receiving device 21 with relatively high consumed power. It is to be noted that a power receiving device with consumed power of lower than 500 W is regarded as the power receiving device 11 with relatively low consumed power

When the user mounts the power receiving device 21 in a predetermined position on the top plate 2 and directs a start-up operation by use of the operation part 5, the control part 4 makes the inverter 3 operate at low power, to feed a high-frequency field from the primary coil 1 to the power receiving device 21. Herein, the load discriminating part 7 determines the kind of the load 9 from electric characteristics such as an input current to the inverter 3, a current flowing through the primary coil 1, and a voltage generated in the primary coil 1.

When it is determined by the load discriminating part 7 that the load 9 is the power receiving device 21 with reliably high consumed power, the control part 4 changes the maximum inputted power, power adjustment range for the inputted power, the number of setting for the load operation and a determination criterion level to serve as a criterion for determining inappropriate load, and the like, while changing the operation specification of the operating section 5 and the display specification of the display part 6, in a manner appropriate for the power receiving device 11.

As shown in Fig. 4, in the case of the load 9 being the power receiving device 21 having relatively high consumed power and provided with the heater, the consumed power may be power slightly lower than the maximum power at the time of induction-heating the pot 10 as the object to be heated, and the set number of load operations may be the set number being around three stages, e.g. a low temperature, a medium temperature and a high temperature. In this case, in the contactless power feeder of the embodiment 1, specifically, when the load discriminating part 7 determines the load 9 as the power receiving device 21 with relatively high consumed power, the control part 4 limits the amount of energization to the primary coil 1 such that the secondary coil 12 of the power receiving device 21 can receive the maximum consumed power of the power receiving device 21, which is the maximum power where 1000 W in the embodiment 1. Further, in order to operate the power receiving device 21, the control part 4 of the operating section 5 changes operational contents so as to be able to perform only an operation to switch the power receiving device 21 to a low temperature, a medium temperature, a high temperature or a stop, while changing display contents of the display part 6 in accordance with the operational contents of the operating section 5. Moreover, in the case of the power receiving device 21 with relatively high consumed power, since it is difficult for the load discriminating part 7 to perform determination as an inappropriate load as compared with the case of the heatable pot depending on the kind of the load 9, a value of electric characteristics as the determination criterion level for determination by the load discriminating part 7 as the inappropriate load in accordance with characteristics of the load 9 is set low as compared with the determination criterion level in the case of the load 9 being the pot that can be induction-heated.

When the control part 4 is changed to a control specification appropriate for the power receiving device 21, the inverter 3 is operated so as to have input power set by the user, to feed high-frequency power to the secondary coil 12 electromagnetically coupled with the primary coil 1. The high-frequency power supplied to the secondary coil 12 is applied to the heater 22 to generate heat, to cook foodstuff inside the container 23. Although grilling as an example of cooking has been described in the contactless power feeder of the embodiment 1, it can be operated with a similar configuration even in the case of an iron, a water heater and the like.

Further, it is also possible to provide switch means such as a relay or a switch between the secondary coil 12 and the heater 22, to detect a temperature(s) of the container 23 and/or the heater 22, to perform on/off control on the switch means based on the detected temperature, so as to adjust an amount of feed to the heater 22.

It should be noted that, from electric characteristics such as an input current to the inverter 3, a current flowing through the primary coil 1, and a voltage generated in the primary coil 1, the load discriminating part 7 can determine whether the load 9 is the power receiving device 11 with relatively low consumed power or the power receiving device 21 with relatively high consumed power.

Moreover, in accordance with the kinds of the power receiving devices 11, 21, the control part 4 can change the maximum inputted power, power adjustment range for the inputted power, the number of setting for the load operation and a determination criterion level to serve as a criterion for determining inappropriate load, and the like, while changing the operation specification of the operating section 5 and the display specification of the display part 6.

Fig. 5 is a graph showing an example of determining the kind of the load 9 from the electric characteristics of the inverter 3. In Fig. 5, a vertical axis is an input current and a horizontal axis is conduction time for a semiconductor switch in the inverter 3.

Since the load 9 is directly electromagnetically coupled with the primary coil 1 or electromagnetically connected with the primary coil 1 via the secondary coil 12, the conduction time for the semiconductor switch in the inverter 3 is changed from a short state to a long state, or an operating frequency is changed from a high state to a low state, to detect characteristics of the primary coil at that time, thereby allowing detection of the kind of the load 9. That is, an expected input current value is decided by a change in conduction time for the semiconductor switch depending on the kind of the load 9, and defining a discrimination line as a determination criterion level with respect to the relation between the change in conduction time or the operating frequency and the input current value based on an experiment, thereby allowing determination of the kind of the load 9.

In the contactless power feeder of the embodiment 1, an example will be described using Fig. 5 where the kind of the load 9 is detected by a change in input current value at the time when the conduction time of the semiconductor switch of the inverter 3 is changed from a short state to a long state.

In Fig. 5, as in a region on the left side from a discrimination line 1 as a determination criterion level, when the input current abruptly increases by an increase in conduction time for the semiconductor switch, the load 9 can be determined as a foreign matter. Further, as in a region below a discrimination line 3 as a determination criterion level, when the input current does not increase even though the conduction time for the semiconductor switch is increased, the state can be determined as a state where a pot not suitable for heating, such as an aluminum pot, is placed or as a no-load state.

When an amount of increase in input current accompanied by the increase in conduction time for the semiconductor switch is positioned inside a region between the discrimination line 1 and the discrimination line 3 as the determination criterion levels, it is possible to determine that the load 9 is the object to be heated such as a pot suitable for induction heating, or the power receiving device. Since the pot suitable for induction heating or the like is strongly electromagnetically coupled with the primary coil 1 and has large equivalent resistance seen from the primary coil as compared with the power receiving device, an amount of increase in input current accompanied by the increase in conduction time for the semiconductor switch becomes larger. Since this amount of increase changes in accordance with a material, a shape, a size or the like of the pot or the like, based on a difference in amount of increase in input current between the object to be heated such as the pot suitable for induction heating and the power receiving device, it is possible to determine, by an experiment, a discrimination line 2 as a determination criterion level for determining the object to be heated and the power receiving device.

Further, since the strength of the electromagnetic coupling with the primary coil 1 differs depending on the kind of the power receiving device, it is possible, by an experiment, to decide a discrimination line 4 as a determination criterion level for determining the kind of the power receiving device based on the difference in amount of increase in input current. In Fig. 5, determination between equipment A and equipment B is performed based on the discrimination line 4 as the determination criterion level in accordance with the difference in electric characteristics due to the difference in equivalent resistance seen from the primary coil with respect to the conduction time.

In addition, although the description has been made taking as an example the relation between the conduction time and the input current, the accuracy in determination can further be improved by combining detected values of the input current, the conduction time for the semiconductor switch, the frequency of the semiconductor switch, the current flowing through the primary coil 1 and the voltage of the primary coil 1.

For example in the case of combining the conduction time for the semiconductor switch in the inverter or the operating frequency with the current of the primary coil 1, when the current of the primary coil 1 with respect to the conduction time for the semiconductor switch or the operating frequency is larger than a previously defined set range, the load 9 electromagnetically coupled with the primary coil 1 can be determined as an inappropriate load such as an aluminum pot. Further, also in the case of the current value of the primary coil 1 being smaller than the previously defined set value, the load 9 can be determined as an inappropriate one. This relation is similar in the case of not using a current of the primary coil 1 but using a voltage of the primary coil 1.

Further, since an expected region for each load 9 is decided by combining the input current, the current of the primary coil and the voltage of the primary coil, it is possible to determine each load 9.

Moreover, in the contactless power feeder of the embodiment 1, the kind of the load 9 has been estimated from the electric characteristics of the inverter 3, but in the present invention, when the load 9 is the power receiving device, the kind of the power receiving device is not particularly limited so long as it is determined even by another method such as a method in which reading of an IC tag or the like, inputting the kind of equipment by the user himself/herself or the like is performed to determine the power receiving device, and the control specification is changed in accordance with the determined power receiving device.

Furthermore, in the embodiment 1, the contactless power feeder is not limited to the induction heating cooker, but a device for heating an iron, a device for turning on lighting equipment, or the like may be used.

As described above, in the contactless power feeder of the embodiment 1, it is sensed whether the load 9 mounted on the top plate 2 is the metal container such as the pot 10 or the power receiving device satisfying a predetermined condition such as provision of the secondary coil 12 electromagnetically coupled with the embodiment 1, and the control specification is changed in accordance with the kind of the load 9, whereby power can be appropriately fed in the control specification in accordance with each load. For this reason, in the contactless power feeder and the contactless transmission system of the embodiment 1, the user has no need for significantly changing the operation method and the like in accordance with the kind of the load 9, thus allowing realization of a contactless power feeder and a contactless transmission system with good operability.

### Embodiment 2

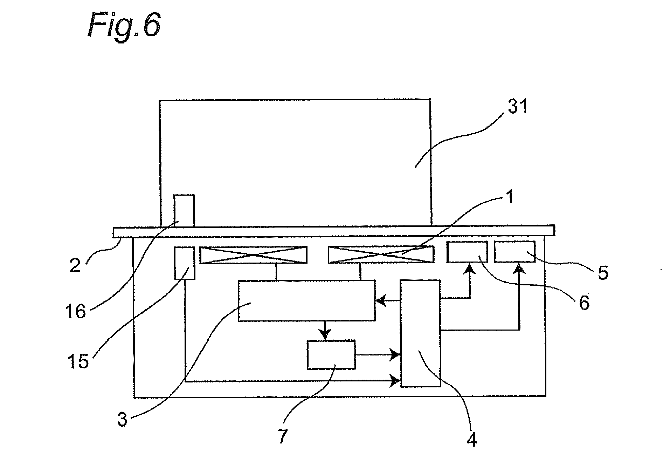

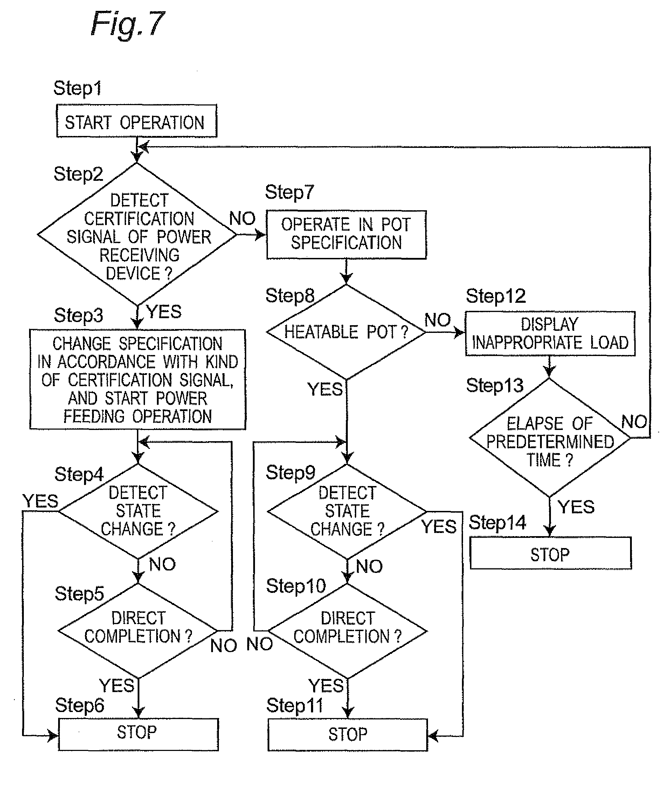

Hereinafter, a contactless power feeder of an embodiment 2 according to the present invention will be described with reference to attached Fig. 6 and 7. Fig. 6 is a view showing a schematic configuration of a contactless transmission system having the contactless power feeder of the embodiment 2 and a power receiving device. The configuration of the embodiment 2 is different from the configuration of the foregoing embodiment 1 in that a primary-side power transmitting/receiving part 15 is provided inside the contactless power feeder and that a secondary-side power transmitting/receiving part 16 is provided inside a power receiving device 31 to which the contactless power feeder feeds power. Hence in the configuration of the embodiment 2, in the contactless transmission system made up of the contactless power feeder and the power receiving device 31, those are pieces of equipment whose mutual operations are previously ensured and certified.

It is to be noted that in descriptions in the embodiment 2, elements practically having the same functions and performing the same operations as the elements in the embodiment 1 are provided with the same numerals, and the descriptions of those will be supported by the descriptions of the embodiment 1.

Next, there will be described an operation and a function in the contactless transmission system made up of the contactless power feeder and the power receiving device 31 of the embodiment 2 configured as above.

When the user mounts the power receiving device 31 in a predetermined position on the top plate 2 and thereafter operates a start-up switch inside the operating section 5 of the contactless power feeder to direct a start-up operation, the control part 4 makes the inverter 3 operate at lower power, to feed a high-frequency field from the primary coil 1 to the power receiving device 31. At this time, using power generated in the secondary coil inside the power receiving device as a power source, the power receiving device 31 transmits an equipment identifying signal, which the power receiving device 31 has, to the primary-side power transmitting/ receiving part 15 of the contactless power feeder. The control part 4 of the contactless power feeder determines the kind of the power receiving device 31 based on the equipment identifying signal from the power receiving device 31 received by the primary-side power transmitting/receiving part 15.

Then, as in the case of the contactless power feeder of the foregoing embodiment 1, in accordance with the kind of the power receiving device 31, the control part 4 changes the maximum inputted power, power adjustment range for the inputted power, the number of setting for the load operation and a determination criterion level to serve as a criterion for determining inappropriate load, and the like, while changing the operation specification of the operating section 5 and the display specification of the display part 6, in a manner appropriate for the power receiving device 31, and then starts a power feeding operation.

When the primary-side power transmitting/receiving part 15 does not sense the equipment identifying signal that specifies the power receiving device 31, the load is estimated as the pot suitable for induction heating, or the like, and a normal induction heating operation is started.

It is to be noted that as for the primary-side power transmitting/receiving part 15 and the secondary-side power transmitting/ receiving part 16, it is possible to use radio communication between the pieces of equipment, including infrared rays, but the communication system is not particularly limited in this disclosure.

Further, as for the power source of the secondary-side power transmitting/receiving part 16 in the power receiving device 31 in the embodiment 2, the system was described as the example, the system making use of power generated in the secondary coil by the high-frequency field fed from the primary coil 1 of the contactless power feeder early in the operation, but a system of housing a battery or the like may be used, and it is not particularly limited in the present disclosure.

Fig. 7 is a flowchart showing an operation of the contactless power feeder of the embodiment 2.

By mounting the power receiving device 31 on the contactless power feeder as the load and operating the start-up switch of the contactless power feeder to bring it into an on-state, the operation is started in step 1. In step 1, the inverter 3 operates at low power, and the high-frequency field is fed from the primary coil 1. The power receiving device 31 as the load transmits a specific certification signal as an equipment identifying signal, which the power receiving device 31 has, to the primary-side power transmitting/receiving part 15. The primary-side power transmitting/receiving part 15 of the contactless power feeder performs a detection operation for the certification signal from the power receiving device 31 (step 2). The control part 4 of the contactless power feeder determines the kind of the power receiving device 31 based on the certification signal received by the primary-side power transmitting/receiving part 15, and as in the case of the contactless power feeder of the foregoing embodiment 1, in accordance with the kind of the power receiving device 31, the control part 4 changes the maximum inputted power, power adjustment range for the inputted power, the number of setting for the load operation and a determination criterion level to serve as a criterion for determining inappropriate load, and the like, while changing the operation specification of the operating section 5 and the display specification of the display part 6, in a manner appropriate for the power receiving device 31, and starts a full-fledged feeding operation (step 3).

As described above, after the start of the power feeding operation, the contactless power feeder detects whether an abrupt change in input power has not occurred and whether the load 9 has not been removed from the top of the contactless power feeder, to monitor the state of the load 9 (step 4). Monitoring of the state change in step 4 is continued until completion of the operation is directed, and upon receipt of the completion direction by operation of the operating section 5 (step 5), the control part 4 stops the operation (step 6).

In step 4, when a state change such as an abrupt change in input power is detected despite the certification signal having been received in step 3, it is for example determined that a foreign matter such as a spoon has put on the contactless power feeder, and the process is moved to step 6 to stop the operation.

It is to be noted that, when the state change such as the abrupt change in input power returns to the state before the detection within previously defined predetermined time and the primary-side power transmitting/ receiving part 15 receives the same certification signal before the change, the power feeding operation is continued. For this reason, in the contactless transmission system of the embodiment 2, unnecessary stoppage of power feeding does not occur during the power feeding operation, thus allowing improvement in operability of the user.

After the start of the operation, when the certification signal from the load is not received in step 2, it is determined that the load is a pot or the like as an object to be heated that should be induction-heated, and the induction heating operation on the object to be heated is started (step 7). At this time, in the contactless power feeder of the embodiment 2, whether or not the load is the pod or the like suitable for induction heating is determined from the electric characteristics of the inverter 3 (step 8). When the load is determined as the pot or the like suitable for induction heating in step 8, the contactless power feeder detects whether the state change such as the abrupt change in input power has not occurred in a step 9. For example, it is monitored as to whether the foreign matter such as the spoon has not been mounted on the contactless power feeder or the load has not been removed from the contactless power feeder. Monitoring of the state change in step 9 is continued until completion of the operation is directed, and when the control part 4 receives the completion direction by operation of the operating section 5 (step 10), the operation is stopped (step 11).

In step 9, when the state change such as the abrupt change in input power is detected, for example when it is determined that the load such as the pot has been removed, the process is moved to step 11 to stop the operation.

It is to be noted that, when the state change such as the abrupt change in input power returns to the state before the detection within previously defined predetermined time, the induction heating operation is continued. For this reason, in the contactless transmission system of the embodiment 2, unnecessary stoppage of heating does not occur, thus allowing improvement in operability of the user.

When it is determined in step 8 that the load is a pot not suitable for induction heating, a display of an inappropriate load is performed in the display part 6 (step 12). Subsequently, the detection operation for the certification signal and checking operation for the heating adaptability of the load are regularly performed until the a predetermined time has elapsed (step 13), and even if the predetermined time has elapsed, when no certification signal can be detected and the load is held in the inappropriate state without a change, the heating operation is stopped (step 14).

Further, as the timing system in which the primary-side power transmitting/receiving part 15 of the contactless power feeder receives the certification signal from the secondary-side power transmitting/receiving part 16 of the power receiving device 31, there are a system in which the primary-side power transmitting/receiving part 15 makes a request of the power receiving device 31 for transmitting a reception signal, and thereafter the secondary-side power transmitting/receiving part 16 transmits a certification signal, and a system in which the secondary-side power transmitting/receiving part 16 of the power receiving device 31 transmits a certification signal in a fixed period, and it is not particularly limited in the present disclosure.

Moreover, in the case of using a system in which the secondary-side power transmitting/receiving part 16 in the power receiving device 31 transmits a certification signal in a fixed period, it can be configured that, when reception of the certification signal of the secondary-side power transmitting/receiving part 16 stops, the contactless power feeder determines the power receiving device 31 as abnormal and stops power feeding to the power receiving device 31.

As thus described, in the contactless transmission system of the embodiment 2, the contactless power feeder is provided with the primary-side power transmitting/receiving part 15 which performs transmission/reception of a signal to/from the power receiving device 31. When a specific certification signal as an equipment identifying signal is received from the power receiving device 31, the control specification of the control part 4 is changed to the control specification suitable for the power receiving device 31 in accordance with the certification signal, thereby allowing realization of the optimum operating state in accordance with the power receiving device 31 in the contactless power feeder. Consequently, according to the configuration of the embodiment 2, it is possible to realize a safe contactless power feeder and a contactless transmission system with good operability.

Although preferred modes of the present invention have been described in detail to a certain extent, the disclosed contents of the preferred modes may be changed in due course in terms of details of the configurations thereof, and a combination and an order of change among each element can be realized without deviating from the scope and the spirit of the invention.

### Industrial Applicability

A contactless power feeder according to the present invention has a function as power feeding equipment to a power receiving device and a function as an induction heating device, while being operable at a power supply voltage adapted to the power receiving device regardless of a difference from a power supply voltage of the power receiving device, and also applicable to uses such as the outdoor use in which a battery serves as a power source, thus being a highly versatile device.

### Reference Signs List

- 1: primary coil
- 2: top plate
- 3: inverter
- 4: control part
- 5: operation part
- 6: display part
- 7: load determining part
- 9: load
- 10: pot
- 11: power receiving device
- 12: secondary coil
- 13: DC power source
- 14: DC motor
- 15: primary-side power transmitting/receiving part
- 16: secondary-side power transmitting/receiving part
- 21: power receiving device
- 22: heater
- 23: container
- 31: power receiving device

## Claims

1. A contactless power feeder, comprising:
a top plate for mounting a load;
a primary coil which is arranged below the top plate and generates a high-frequency field;
an inverter which feeds high-frequency power to the primary coil;
a control part which controls the inverter; and
a load discriminating part which determines whether the load is an object to be heated that is to be induction-heated, or a power receiving device provided with a secondary coil that is electromagnetically coupled with the primary coil,
wherein the control part is configured to control the inverter in accordance with a result of determination by the load discriminating part.

2. The contactless power feeder according to claim 1, wherein the control part is configured to decrease power to be fed to the primary coil in the case of the load having been determined as the power receiving device than in the case of the load having been determined as the object to be heated, based on a result of determination by the load discriminating part.

3. The contactless power feeder according to claim 1 or 2, comprising
an operation part which sets an amount of energization to the primary coil,
wherein the control part is configured to change operational contents of the operation part so as to correspond to a specification of the power receiving device in the case of the load having been determined as the power receiving device based on a result of determination by the load discriminating part.

4. The contactless power feeder according to claim 3, comprising a display part which displays a function of the operation part, wherein the control part is configured to change a display of the display part in accordance with a change in operational contents of the operation part.

5. The contactless power feeder according to any one of claims 1 to 4, wherein
the load discriminating part is configured to determine the kind of a load at least from electric characteristics of at least an input current to an inverter 3, a current flowing through the first coil and a voltage generated in the primary coil, and
the control part is configured to lower a value of the electric characteristics as a determination criterion level on which the load discriminating part determines the load as an inappropriate load from the electric characteristics in the case of the load having been determined as the power receiving device as compared with the case of the load having been determined as the object to be heated.

6. A contactless transmission system, comprising:
a contactless power feeder; and
a power receiving device which is arranged adjacently to and electromagnetically coupled with the contactless power feeder and to which power is fed from the contactless power feeder,
wherein
the contactless power feeder is provided with a top plate which is mounted with a load, a primary coil which is arranged below the top plate and generates a high-frequency field, an inverter which feeds high-frequency power to the primary coil, a control part which controls the inverter, and a load discriminating part which determines whether the load is an object to be heated, or a power receiving device provided with a secondary coil that is electromagnetically coupled with the primary coil,
the power receiving device is provided with a secondary coil which is mounted on the contactless power feeder and receives a high-frequency field from the primary coil to form desired power, and an operation part which is driven by the power from the secondary coil, and
the control part is configured to control the inverter in accordance with a result of determination of the load discriminating part.

7. The contactless transmission system according to claim 6, wherein
the power receiving device is provided with a secondary-side power transmitting/receiving part which transmits an equipment identifying signal as a certification signal specific to the power receiving device,
the contactless power feeder is provided with a primary-side power transmitting/receiving part which receives the equipment identifying signal from the power receiving device,
and the control part is configured to control the inverter so as to correspond to a specification of the power receiving device based on the equipment identifying signal received by the primary-side power transmitting/receiving part.

8. The contactless transmission system according to claim 7, wherein
the contactless power feeder is provided with an operation part which sets an amount of energization to the primary coil, and
the control part is configured to change operational contents of the operation part so as to correspond to a specification of the power receiving device in the case of the load having been determined as the power receiving device based on the equipment identifying signal received by the primary-side power transmitting/receiving part.

9. The contactless transmission system according to claim 8, wherein
the contactless power feeder is provided with a display part which displays a function of the operation part, and
the control part is configured to change a display of the display part in accordance with a change in operational contents of the operation part.
